# EUROPEAN PATENT APPLICATION

(11) **EP 4 116 276 A1**
(43) Date of publication of application: **11.01.2023**
(21) Application number: 21184420.4
(22) Date of filing: 08.07.2021
(51) Int. Cl.: C04B 28/14, C04B 28/06, C04B 40/06, C04B 111/10

(54) **USE OF AT LEAST ONE ALKALI AND/OR EARTH ALKALINE METAL SALT IN AN INORGANIC MORTAR SYSTEM BASED ON ALUMINOUS CEMENT TO ACCELERATE THE CURING OF THE CEMENT IN CHEMICAL FASTENING**

(71) Applicant: Hilti Aktiengesellschaft, 9494 Schaan (LI)
(72) Inventor: Schönlein, Markus, 82205 Gilching (DE)
(74) Representative: Hilti Aktiengesellschaft Corporate Intellectual Property

(57) **Abstract**

The present invention pertains to a use of at least one alkali and/or earth alkaline metal salt in an inorganic mortar system for a chemical fastening of anchoring means in mineral substrates, comprising a curable aluminous cement component A and an initiator component B for initiating the curing process, component A further comprising at least one blocking agent selected from the group consisting of phosphoric acid, metaphosphoric acid, phosphorous acid, boric acid and phosphonic acids, and component B comprising an activator. Moreover, the present invention pertains to a use of at least one alkali and/or earth alkaline metal salt in an inorganic mortar to accelerate curing of the cements as well as to increase load values, and to a method for a chemical fastening of anchoring means, preferably of metal elements, in mineral substrates, such as structures made of brickwork, concrete, pervious concrete or natural stone.

## Description

### FIELD OF THE INVENTION

The present invention pertains to a use of at least one alkali and/or earth alkaline metal salt in an inorganic mortar system for a chemical fastening of anchoring means in mineral substrates, comprising a curable aluminous cement component A and an initiator component B for initiating the curing process, component A further comprising at least one blocking agent selected from the group consisting of phosphoric acid, metaphosphoric acid, phosphorous acid, boric acid and phosphonic acids, and component B comprising an activator. In particular, the present invention pertains to the use of at least one alkali and/or earth alkaline metal salt in an inorganic mortar system for a chemical fastening of anchoring means in mineral substrates to accelerate the curing of the cement. Moreover, the present invention pertains to a method for a chemical fastening of anchoring means, preferably of metal elements, in mineral substrates, such as structures made of brickwork, concrete, pervious concrete or natural stone.

### BACKGROUND OF THE INVENTION

Many mortar systems exist which provide a good chemical fastening of anchoring means in mineral substrates. For example, organic systems based on free-radically polymerizable resins are used when fast curing is desired. However, such systems are generally known to be polluting, expensive, potentially hazardous and/or toxic for the environment and for the person who handles them and they often need to be specifically labelled. Moreover, organic systems often show a much reduced stability when thermally exposed to strong sunlight or otherwise elevated temperatures, such as fire, thereby decreasing their mechanical performance when it comes to chemical fastening of anchoring means.

In order to overcome these drawbacks, predominantly mineral systems based on aluminous cement have been developed. Aluminous cement has as its major constituent monocalcium aluminate and is widely used in the building and construction industries as the final products evidence a high level of mechanical performance over extended periods of time. Also, aluminous cement is resistant to bases and attains its maximum strength more rapidly than Portland cement and is capable of withstanding solutions of sulfates. Hence, aluminous cement systems are preferably employed in the field of chemical anchoring.

When it comes to chemical fastening of anchoring means in mineral substrates, most of the known systems lack sufficient fluidity for most practical applications of the resultant compositions. Often such prior art compositions also evidence a tendency to crack in a relatively short time or do not exhibit the required mechanical performance, in particular under certain conditions such as under the influence of elevated temperatures, in diamond-drilled boreholes, or in wet boreholes as well as over a long period of time. Moreover, known systems tend to exhibit a large extend of shrinkage when applied in a borehole which results in an insufficient anchoring of the anchoring means.

Moreover, there is a need for a significant acceleration of the curing of the cement as this allows for speeding up construction on a building site thereby saving valuable labor time. In addition, there is a need to reduce labelling by reducing harmful substances, e.g. cancerogenic, toxic, mutagenic or environmentally hazardous substances, in the anchoring system, such as peroxides, reactive diluents and resins, in order to improve the handling safety in production and for operators as well as during transportation and to reduce costs for logistics and storage of products.

There is also an increased need for sustainable binders in fastening. The use of less limited resources in an anchoring system, is more sustainable compared to the current available systems, in particular also Portland cement-based and aluminate cement-based systems have also a lower carbon footprint or a lower global warming potential, respectively, than synthetic resins or components of limited availability in view of their resources.

Therefore, there is a need for an inorganic mortar system, preferably a two-component inorganic mortar system, which is superior over the prior art systems. In particular, it is of interest to provide a system that can be used for a chemical fastening of anchoring means in mineral substrates without adversely affecting the handling, characteristics and the mechanical performance of the chemical anchoring system, especially when applied in diamond-drilled boreholes, in wet boreholes and over a long period of time. Especially, there is a need for a system, wherein curing of the cements is accelerated when compared to the known systems. In addition, there is a long felt need to use less components having limited resources in an anchoring system thereby addressing sustainability and at the same time lower the carbon footprint.

In view of the above, it is an object of the present invention to provide an inorganic mortar system, preferably a multiple-component mortar system, in particular a two-component inorganic mortar system, which has an excellent mechanical performance, in particular under certain conditions such as in diamond-drilled boreholes, in wet boreholes and over a long period of time and at the same time having increased load values when compared to the known systems as well as wherein curing of the cement is accelerated.

Moreover, it is an object of the present invention to provide a method for a chemical fastening of anchoring means, preferably of metal elements, in mineral substrates, such as structures made of brickwork, concrete, pervious concrete or natural stone, using said inorganic mortar system

Also, it is an object to provide the use of at least one alkali and/or earth alkaline metal salt in an inorganic mortar system to accelerate the curing of the cement in chemical fastening to furnish sustainability and reduce harmful substances in the area of application of the final inorganic anchoring system.

These and other objectives as they will become apparent from the ensuring description of the invention are solved by the present invention as described in the independent claims. The dependent claims pertain to preferred embodiments.

### SUMMARY OF THE INVENTION

In one aspect, the present invention pertains to a use of at least one alkali and/or earth alkaline metal salt in an inorganic mortar system for a chemical fastening of anchoring means in mineral substrates to accelerate curing of the cement, comprising a curable aluminous cement component A and an initiator component B for initiating the curing process, component A further comprising at least one blocking agent selected from the group consisting of phosphoric acid, metaphosphoric acid, phosphorous acid, boric acid and phosphonic acids, and component B comprising an activator.

In another aspect, the present invention pertains to a method for a chemical fastening of anchoring means, preferably of metal elements, in mineral substrates, such as structures made of brickwork, concrete, pervious concrete or natural stone.

### DETAILED DESCRIPTION OF THE INVENTION

The following terms and definitions will be used in the context of the present invention:
As used in the context of present invention, the singular forms of "a" and "an" also include the respective plurals unless the context clearly dictates otherwise. Thus, the term "a" or "an" is intended to mean "one or more" or "at least one", unless indicated otherwise.

The term "aluminous cement" in the context of the present invention refers to a calcium aluminate cement that consists predominantly of hydraulic active calcium aluminates. Alternative names are "high-alumina cement" or "Ciment fondu" in French. The main active constituent of calcium aluminate cements is monocalcium aluminate (CaAl₂O₄, CaO · Al₂O₃, or CA in the cement chemist notation).

The term "activator" in the context of the present invention refers to a compound or composition that modifies the chemical environment to start a particular chemical reaction. In the present invention the activator modifies the pH-value of the mortar suspension thereby de-blocking the hydraulic binder in the final mixture.

The term "retarder" in the context of the present invention refers to a compound or composition that modifies the chemical environment to delay a particular chemical reaction. In the present invention the retarder modifies the hydration ability of the calcium aluminate cement of the mortar suspension thereby delaying the hydraulic binder action in the final mixture.

The term "initial set-time" in the context of the present invention refers to the time at which the mixture of component A and component B starts to set after mixing. During the time period after mixing, the mixture stays in the form of a more or less fluid aqueous suspension or paste of solid products.

It has been surprisingly found out by the inventors, that the addition of at least one alkali and/or earth alkaline metal salt in an inorganic mortar system for a chemical fastening of anchoring means in mineral substrates, comprising a curable aluminous cement component, preferably based on calcium aluminate cement, results in a significant acceleration of the curing of the cement as well as an increase in load values, in particular if the at least one alkali and/or earth alkaline metal salt is present in the curable aluminous cement component, when compared to a system not comprising at least one alkali and/or earth alkaline metal salt in the curable aluminous cement component. It has also been found out that the addition of at least one alkali and/or earth alkaline metal salt does not adversely affecting the handling, characteristics and the mechanical performance of the chemical anchoring system, especially when applied in diamond-drilled boreholes, in wet boreholes and over a long period of time.

Therefore, the present invention pertains to a use of at least one alkali and/or earth alkaline metal salt in an inorganic mortar system for a chemical fastening of anchoring means in mineral substrates to accelerate curing of the cement, comprising a curable aluminous cement component A and an initiator component B for initiating the curing process, component A further comprising at least one blocking agent selected from the group consisting of phosphoric acid, metaphosphoric acid, phosphorous acid, boric acid and phosphonic acids, and component B comprising an activator. In particular, the at least one alkali and/or earth alkaline metal salt is advantageously present in component A.

Component A as used in the present invention is based on an aluminous cement (CAC) or a calcium sulfoaluminate cement (CSA). The aluminous cement component which can be used in the present invention is preferably an aluminous cement component based on an aqueous-phase calcium aluminate cement (CAC). The aluminous cement to be used in the present invention is characterized by rapid set and rapid hardening, rapid drying, excellent resistance to corrosion and shrinkage. Such a calcium aluminate cement suitable to be used in the present invention is for example Ternal^{®} White (Kerneos, France).

Component A as used in the present invention comprises at least about 40 wt.-%, preferably at least about 50 wt.-%, more preferably at least about 60 wt.-%, most preferably at least about 70 wt.-%, from about 40 wt.-% to about 95 wt.-%, preferably from about 50 wt.-% to about 85 wt.-%, more preferably from about 60 wt.-% to about 80 wt.-%, most preferably from about 70 wt.-% to about 75 wt.-% of aluminous cement, based on the total weight of component A.

According to an alternative embodiment of the invention, component A as used comprises at least about 20 wt.-%, preferably at least about 30 wt.-%, more preferably at least about 40 wt.-%, most preferably at least about 50 wt.-%, from about 20 wt.-% to about 80 wt.-%, preferably from about 30 wt.-% to about 70 wt.-%, more preferably from about 35 wt.-% to about 60 wt.-%, most preferably from about 40 wt.-% to about 55 wt.-% of aluminous cement, based on the total weight of component A and at least about 5 wt.-%, preferably at least about 10 wt.-%, more preferably at least about 15 wt.-%, most preferably at least about 20 wt.-%, from about 1 wt.-% to about 50 wt.-%, preferably from about 5 wt.-% to about 40 wt.-%, more preferably from about 10 wt.-% to about 30 wt.-%, most preferably from about 15 wt.-% to about 25 wt.-% of calcium sulfate, preferably calcium sulfate hemihydrate, based on the total weight of component A. In a preferred alternative embodiment of the two-component mortar system of the present invention, the ratio of CaSO₄/CAC of component A should be less or equal to 35:65.

The blocking agent comprised in component A as used in the present invention is selected from the group consisting of boric acid, phosphoric acid, metaphosphoric acid, phosphorous acid and phosphonic acids, preferably is phosphoric acid or metaphosphoric acid, most preferably is phosphoric acid, in particular an 85% aqueous solution of phosphoric acid. Component A comprises at least about 0.1 wt.-%, preferably at least about 0.3 wt.-%, more preferably at least about 0.4 wt.-%, most preferably at least about 0.5 wt.-%, from about 0.1 wt.-% to about 20 wt.-%, preferably from about 0.1 wt.-% to about 15 wt.-%, more preferably from about 0.1 wt.-% to about 10 wt.-%, most preferably from about 0.3 wt.-% to about 5 wt.-% of said blocking agent, based on the total weight of component A. In a preferred embodiment, component A comprises from about 0.3 wt.-% to about 10 wt.-% of 85% aqueous solution of phosphoric acid, based on the total weight of component A. Preferably, the amounts of aluminous cement and/or calcium sulfoaluminate cement by weight relative to the hydraulic binder total weight are higher than any of the following values: 50%, 60%, 70%, 80%, 90%, 95%, 99% or are 100%.

The at least one alkali and/or earth alkaline metal salt used in the inorganic mortar system for a chemical fastening of anchoring means in mineral substrates to accelerate curing of the cement (also referred to as accelerator component), is constituted of at least one alkali and/or earth alkaline metal salt selected from the group consisting of hydroxides, chlorides, sulfates, phosphates, monohydrogen phosphates, dihydrogen phosphates, nitrates, nitrites, carbonates and mixtures thereof, preferably the accelerator component is an alkali or earth alkaline metal salt, still preferably is a watersoluble alkali or earth alkaline metal salt, more preferably is a calcium metal salt, such as calcium hydroxide, calcium sulfate, calcium carbonate, calcium nitrate, calcium nitrite, calcium chloride, calcium formate or calcium phosphate, a sodium metal salt, such as sodium hydroxide, sodium sulfate, sodium carbonate, sodium nitrate, sodium nitrite, sodium chloride, sodium formate or sodium phosphate, or a lithium metal salt, such as lithium hydroxide, lithium sulfate, lithium sulfate monohydrate, lithium carbonate, lithium nitrate, lithium chloride, lithium formate or lithium phosphate, most preferably is lithium sulfate or lithium sulfate monohydrate.

The at least one alkali and/or earth alkaline metal salt used according to the present invention, is preferably comprised in the curable aluminous cement component A of the inorganic mortar system. In a preferred embodiment of the present invention, the at least one alkali and/or earth alkaline metal salt is comprised in a curable aluminous cement component based on an aqueous-phase calcium aluminate cement of the inorganic mortar system.

Component A comprises at least about 0.005 wt.-%, preferably at least about 0.01 wt.-%, more preferably at least about 0.05 wt.-%, most preferably at least about 0.1 wt.-%, from about 0.005 wt.-% to about 10 wt.-%, preferably from about 0.01 wt.-% to about 5 wt.-%, more preferably from about 0.1 wt.-% to about 1 wt.-%, most preferably from about 0.1 wt.-% to about 0.5 wt.-% of said accelerator, based on the total weight of component A.

Component A may additionally comprise a plasticizer. The plasticizer comprised in component A may be selected from the group consisting of low molecular weight (LMW) polyacrylic acid polymers, superplasticizers from the family of polyphosphonate polyox and polycarbonate polyox, and ethacryl superplasticizers from the polycarboxylate ether group, and mixtures thereof, for example Ethacryl^{™} G (Coatex, Arkema Group, France), Acumer^{™} 1051 (Rohm and Haas, U.K.), or Sika^{®} ViscoCrete^{®}-20 HE (Sika, Germany). Suitable plasticizers are commercially available products. Component A may comprise at least about 0.2 wt.-%, preferably at least about 0.3 wt.-%, more preferably at least about 0.4 wt.-%, most preferably at least about 0.5 wt.-%, from about 0.2 wt.-% to about 20 wt.-%, preferably from about 0.3 wt.-% to about 15 wt.-%, more preferably from about 0.4 wt.-% to about 10 wt.-%, most preferably from about 0.5 wt.-% to about 5 wt.-% of said plasticizer, based on the total weight of component A.

In an advantageous embodiment, component A as used in the present invention further comprises the following characteristics, taken alone or in combination.

Component A may additionally comprise a thickening agent. The thickening agents which can be used in the present invention may be selected from the group consisting of organic products, such as xanthan gum, welan gum or DIUTAN^{®} gum (CPKelko, USA), starched-derived ethers, guar-derived ethers, polyacrylamide, carrageenan, agar, and mineral products, such as clay, and their mixtures. Suitable thickening agents are commercially available products. Component A comprises at least about 0.01 wt.-%, preferably at least about 0.1 wt.-%, more preferably at least about 0.2 wt.-%, most preferably at least about 0.3 wt.-%, from about 0.01 wt.-% to about 10 wt.-%, preferably from about 0.1 wt.-% to about 5 wt.-%, more preferably from about 0.2 wt.-% to about 1 wt.-%, most preferably from about 0.3 wt.-% to about 0.7 wt.-% of said thickening agent, based on the total weight of component A.

Component A may further comprise an antibacterial or biocidal agent. The antibacterial or biocidal agents which can be used in the present invention may be selected from the group consisting of compounds of the isothiazolinone family, such as methylisothiazolinone (MIT), octylisothiazolinone (OIT) and benzoisothiazolinone (BIT) and their mixtures. Suitable antibacterial or biocidal agents are commercially available products. Exemplarily mentioned are Ecocide K35R (Progiven, France) and Nuosept OB 03 (Ashland, The Netherlands). Component A comprises at least about 0.001 wt.-%, preferably at least about 0.005 wt.-%, more preferably at least about 0.01 wt.-%, most preferably at least about 0.015 wt.-%, from about 0.001 wt.-% to about 1.5 wt.-%, preferably from about 0.005 wt.-% to about 0.1 wt.-%, more preferably from about 0.01 wt.-% to about 0.075 wt.-%, most preferably from about 0.015 wt.-% to about 0.03 wt.-% of said antibacterial or biocidal agent, based on the total weight of component A. In a preferred embodiment, component A comprises from about 0.015 wt.-% to about 0.03 wt.-% of Nuosept OB 03, based on the total weight of component A.

In an alternative embodiment, component A comprises at least one filler, in particular an organic or mineral filler. The filler which can be used in the present invention may be selected from the group consisting of quartz powder, preferably quartz powder having an averaged grain size (d50%) of about 16 µm, quartz sand, clay, fly ash, fumed silica, carbonate compounds, aluminas, pigments, titanium oxides, light fillers, and their mixtures. Suitable mineral fillers are commercially available products. Exemplarily mentioned is quartz powder Millisil W12 or W6 (Quarzwerke GmbH, Germany). Component A comprises at least about 1 wt.-%, preferably at least about 2 wt.-%, more preferably at least about 5 wt.-%, most preferably at least about 8 wt.-% of said at least one filler, based on the total weight of component A.

The water content comprised in component A as used in the present invention is at least about 1 wt.-%, preferably at least about 5 wt.-%, more preferably at least about 10 wt.-%, most preferably at least about 20 wt.-%, from about 1 wt.-% to about 50 wt.-%, preferably from about 5 wt.-% to about 40 wt.-%, more preferably from about 10 wt.-% to about 30 wt.-%, most preferably from about 15 wt.-% to about 25 wt.-%, based on the total weight of component A.

The presence of an accelerator, plasticizer, thickening agent as well as an antibacterial or biocidal agent does not change the overall inorganic nature of the cementitious component A.

Component A comprising the aluminous cement or calcium sulfoaluminate cement is present in aqueous-phase, preferably in form of a slurry or paste.

Initiator component B as used in the present invention comprises an activator, at least one retarder, optionally at least one mineral filler and water. To ensure sufficient processing time, at least one retarder, which prevents premature hardening of the mortar composition, is used in a distinct concentration in addition to the initiator component.

The activator present in component B comprises at least one alkali and/or alkaline earth metal salt selected from the group consisting of hydroxides, chlorides, sulfates, phosphates, monohydrogen phosphates, dihydrogen phosphates, nitrates, carbonates and mixtures thereof.

In particular, the activator component is constituted of at least one alkali and/or alkaline earth metal salt selected from the group consisting of hydroxides, chlorides, sulfates, phosphates, monohydrogen phosphates, dihydrogen phosphates, nitrates, carbonates and mixtures thereof, preferably the activator component is an alkali or alkaline earth metal salt, more preferably is a calcium metal salt, such as calcium hydroxide, calcium sulfate, calcium carbonate, calcium formate, calcium nitrate or calcium phosphate, a sodium metal salt, such as sodium hydroxide, sodium sulfate, sodium carbonate, sodium nitrate or sodium phosphate, or a lithium metal salt, such as lithium hydroxide, lithium sulfate, lithium carbonate, lithium nitrate or lithium phosphate, or a potassium metal salt, such as potassium hydroxide, potassium sulfate, potassium carbonate, potassium formate, potassium nitrate or potassium phosphate, most preferably is sodium hydroxide.

Component B comprises at least about 0.01 wt.-%, preferably at least about 0.02 wt.-%, more preferably at least about 0.05 wt.-%, most preferably at least about 1 wt.-%, from about 0.01 wt.-% to about 40 wt.-%, preferably from about 0.02 wt.-% to about 35 wt.-%, more preferably from about 0.05 wt.-% to about 30 wt.-%, most preferably from about 1 wt.-% to about 25 wt.-% of said activator, based on the total weight of component B. In a particular preferred embodiment, the activator is sodium hydroxide. The water content comprised in component B is at least about 1 wt.-%, preferably at least about 5 wt.-%, more preferably at least about 10 wt.-%, most preferably at least about 20 wt.-%, from about 1 wt.-% to about 60 wt.-%, preferably from about 5 wt.-% to about 50 wt.-%, more preferably from about 10 wt.-% to about 40 wt.-%, most preferably from about 15 wt.-% to about 30 wt.-%, based on the total weight of component B. In a particular preferred embodiment the sodium hydroxide content comprised in component B is at least about 0.1 wt.-%, preferably at least about 1 wt.-%, more preferably at least about 2 wt.-%, most preferably at least about 3 wt.-%, from about 0.1 wt.-% to about 15 wt.-%, preferably from about 1 wt.-% to about 10 wt.-%, more preferably from about 2 wt.-% to about 8 wt.-%, most preferably from about 3 wt.-% to about 6 wt.-%, based on the total weight of component B.

The at least one retarder comprised in component B as used in the present invention is selected from the group consisting of citric acid, tartaric acid, lactic acid, salicylic acid, gluconic acid and mixtures thereof, preferably is a mixture of citric acid and tartaric acid. Component B comprises at least about 0.1 wt.-%, preferably at least about 0.2 wt.-%, more preferably at least about 0.5 wt.-%, most preferably at least about 1.0 wt.-%, from about 0.1 wt.-% to about 25 wt.-%, preferably from about 0.2 wt.-% to about 15 wt.-%, more preferably from about 0.5 wt.-% to about 15 wt.-%, most preferably from about 1.0 wt.-% to about 10 wt.-% of said retarder, based on the total weight of component B.

In a particular preferred embodiment of component B as used in the present invention, the ratio of citric acid/tartaric acid is 1.6/1.

The at least one mineral filler comprised in component B as used in the present invention may be selected from the group consisting of limestone fillers, sand, corundum, dolomite, alkaline-resistant glass, alumina, crushed stones, gravels, pebbles and mixtures thereof, preferred are limestone fillers, such as various calcium carbonates. The at least one mineral filler is preferably selected from the group consisting of limestone fillers or quartz fillers, such as quartz powder Millisil W12 or W6 (Quarzwerke GmbH, Germany) and quartz sand. The at least one mineral filler of component B is most preferably a calcium carbonate or a mixture of calcium carbonates. Component B comprises at least about 30 wt.-%, preferably at least about 40 wt.-%, more preferably at least about 50 wt.-%, still more preferably at least about 60 wt.-%, most preferably at least about 70 wt.-%, from about 30 wt.-% to about 95 wt.-%, preferably from about 35 wt.-% to about 90 wt.-%, more preferably from about 40 wt.-% to about 85 wt.-%, still more preferably from about 45 wt.-% to about 80 wt.-%, most preferably from about 50 wt.-% to about 75 wt.-% of at least one mineral filler, based on the total weight of component B.

In a particular preferred embodiment, the at least one mineral filler comprised in component B is a mixture of three different calcium carbonates, i.e. calcium carbonate fines, such as different Omyacarb^{®} types (Omya International AG, Germany). Most preferably, the first calcium carbonate has an average particle size (d50%) of about 3.2 µm and a residue of 0.05% on a 45 µm sieve (determined according to ISO 787/7). The second calcium carbonate has an average particle size (d50%) of about 7.3 µm and a residue of 0.5% on a 140 µm sieve (determined according to ISO 787/7). The third calcium carbonate has an average particle size (d50%) of about 83 µm and a residue of 1.0% on a 315 µm sieve (determined according to ISO 787/7).

In a particular preferred alternative embodiment, the at least one mineral filler comprised in component B is a mixture of three different quartz fillers. Most preferably, the first quartz filler is a quartz sand having an average particle size (d50%) of about 240 µm. The second quartz filler is a quartz powder having an average grain size (d50%) of about 40 µm. The third quartz filler is a quartz powder having an average grain size (d50%) of about 15 µm.

In an advantageous embodiment, component B further comprises the following characteristics, taken alone or in combination.

Component B may additionally comprise a thickening agent. The thickening agent to be used in the present invention may be selected from the group consisting of bentonite, silicon dioxide, quartz, thickening agents based on acrylate, such as alkali-soluble or alkali-swellable emulsions, fumed silica, clay and titanate chelating agents or combinations thereof. Exemplarily mentioned are polyvinyl alcohol (PVA), hydrophobically modified alkali soluble emulsions (HASE), hydrophobically modified ethylene oxide urethane polymers known in the art as HEUR, and cellulosic thickeners such as hydroxymethyl cellulose (HMC), hydroxyethyl cellulose (HEC), hydrophobically-modified hydroxy ethyl cellulose (HMHEC), sodium carboxymethyl cellulose (SCMC), sodium carboxymethyl 2-hydroxyethyl cellulose,2-hydroxypropyl methyl cellulose, 2-hydroxyethyl methyl cellulose, 2-hydroxybutyl methyl cellulose, 2-hydroxyethyl ethyl cellulose, 2-hydoxypropyl cellulose, attapulgite clay, and mixtures thereof. Suitable thickening agents are commercially available products, such as Optigel WX (BYK-Chemie GmbH, Germany), Rheolate 1 (Elementis GmbH, Germany) and Acrysol ASE-60 (The Dow Chemical Company). Component B comprises at least about 0.01 wt.-%, preferably at least about 0.05 wt.-%, more preferably at least about 0.1 wt.-%, most preferably at least about 0.3 wt.-%, from about 0.01 wt.-% to about 15 wt.-%, preferably from about 0.05 wt.-% to about 10 wt.-%, more preferably from about 0.1 wt.-% to about 5 wt.-%, most preferably from about 0.3 wt.-% to about 1 wt.-% of said thickening agent, based on the total weight of component B.

The presence of a retarder and thickening agent does not change the overall inorganic nature of the cementitious component B. Component B may also comprise a plasticizer or dispersing agent. These are known to a person skilled in the art.

Component B comprising the activator and retarder is present in aqueous-phase, preferably in form of a slurry or paste.

It is preferred that the pH-value of component B is above 10, more preferably above 11 and most preferably is above 12, in particular in the range between 10 and 14, preferably between 11 and 13.

It is particular preferred that the proportions of water in the two components, namely component A and component B, are chosen so that the water to aluminous cement ratio (W/CAC) or water to calcium sulfoaluminate cement (W/CAS), in the product obtained by mixing components A and B is lower than 1.5, preferably between 0.2 and 1.2, most preferably between 0.3 and 0.8. In a preferred embodiment, the ratio of water to calcium aluminate cement comprising calcium sulfate (W/(CAC+CaSO₄)) in the product obtained by mixing components A and B is 0.35.

Moreover, it is particular preferred that the proportion of lithium in component A is chosen so that the lithium to aluminous cement ratio (Li/CAC) and lithium to calcium sulfoaluminate cement (Li/CAS), in the product obtained by mixing components A and B is lower than 0.05, preferably between 0.00005 and 0.05, most preferably between 0.0001 and 0.001. In a particular preferred embodiment, the proportion of lithium sulfate monohydrate in component A is chosen so that the ratio of calcium aluminate cement comprising calcium sulfate to lithium sulfate monohydrate ((CAC+CaSO4)/Li₂SO₄ x H₂O) in the product obtained by mixing components A and B is in the range of from 50:1 to 2,000:1, more preferably the ratio is 300:1 to 1,500:1, even more preferably in the range of 500:1 to 600:1.

Moreover, it is particular preferred that the proportion of retarder in component B is chosen so that the citric acid/tartaric acid to aluminous cement ratio and citric acid/tartaric acid to calcium sulfoaluminate cement, in the product obtained by mixing components A and B is lower than 0.1, preferably between 0.005 and 0.08, most preferably between 0.007 and 0.3.

In a most preferred embodiment, component A comprises or consists of the following components:
70 to 85 wt.-% of aluminous cement,
0.5 to 1.5 wt.-% of phosphoric acid,
0.05 to 2.0 wt.% lithium sulfate or lithium sulfate monohydrate,
0.5 to 1.5 wt.-% of plasticizer,
0.001 to 0.05 wt.-% of an antimicrobial or biocidal agent,
optionally 5 to 20 wt.-% of mineral fillers, and
15 to 25 wt.-% of water.

In a most preferred embodiment, component B comprises or consists of the following components:
0.1 wt.-% to 5 wt.-% of sodium hydroxide,
0.05 wt.-% to 5 wt.-% of citric acid,
0.05 wt.-% to 4 wt.-% of tartaric acid,
35 wt.-% to 45 wt.-% of a first mineral filler,
15 wt.-% to 25 wt.-% of a second mineral filler,
10 wt.-% to 20 wt.-% of a third mineral filler,
0.01 wt.-% to 0.5 wt.-% of a thickening agent,
Optionally further filler, and
15 wt.-% to 25 wt.-% of water.

Component A as used in the present invention may be prepared as follows: The phosphor-containing blocking agent is mixed with water, so that the pH-value of the resulting mixture is about 2. Plasticizer and antibacterial/biocidal agent are added, and the mixture homogenized. Aluminous cement, optionally calcium sulfate, and optionally mineral filler are premixed and added stepwise to the mixture whilst increasing the stirring speed, so that the pH-value of the resulting mixture is below 7. Finally, accelerator and thickening agent are added and mixed until complete homogenization of the mixture.

Component B as used in the present invention may be prepared as follows: The activator is dissolved in deionized water, followed by subsequent addition of retarder and thickening agent and optionally mineral fillers under stirring until the mixture homogenizes, obtaining finally a smooth, liquid pasty slurry, the pH being above 12.

Component A and B are present in aqueous phase, preferably in form of a slurry or paste. In particular, components A and B have a pasty to fluid aspect according to their respective compositions. In one preferred embodiment, component A and component B are in paste form thereby preventing sagging at the time of mixing the two components.

The weight ratio between component A and component B (A/B) is preferentially comprised between 7/1 and 1/3, preferably is 3/1. Preferably, the composition of the mixture comprises 75 wt.-% of component A and 25 wt.-% of component B. In an alternative embodiment, the composition of the mixture comprises 25 wt.-% of component A and 75 wt.-% of component B.

The inorganic mortar system, preferably the two-component inorganic mortar system, is of mineral nature, which is not affected by the presences of additional thickening agents of other agents.

It is preferred that the inorganic mortar system has an initial set-time of at least 5 min, preferably of at least 10 min, more preferably of at least 15 min, most preferably of at least 20 min, in particular in the range of from about 5 to 25 min, preferably in the range of about 10 to 20 min, after mixing of the two components A and B.

In the multi-component inorganic mortar system, especially the two-component inorganic mortar system, the volume ratio of cementitious component A to initiator component B is 1:1 to 7:1, preferably is 3:1. In an alternative embodiment, the volume ratio of cementitious component A to initiator component B is 1:3 to 1:2.

After being produced separately, component A and component B are introduced into separate containers, from which they are ejected by means of mechanical devices and are guided through a mixing device. The inorganic mortar system is preferably a ready-for-use system, whereby component A and B are separately arranged from each other in a multi-chamber device, such as a multi-chamber cartridge and/or a multi-chamber cylinder or in two-component capsules, preferably in a two-chamber cartridge or in two-component capsules. The multi-chamber system preferably includes two or more foil bags for separating curable component A and initiator component B. The contents of the chambers or bags which are mixed together by a mixing device, preferably via a static mixer, can be injected into a borehole. The assembly in multiple chamber cartridges or pails or sets of buckets is also possible.

The hardening aluminous cement composition exiting from the static mixer is inserted directly into the borehole, which is required accordingly for fastening the anchors and post-installed reinforcing bars, and has been initially introduced into the mineral substrate, during the chemical fastening of anchors and post-installed reinforcing bars, whereupon the construction element to be fastened, for example an anchor rod, is inserted and adjusted, whereupon the mortar composition sets and hardens. In particular, the inorganic mortar system is to be considered as a chemical anchor for fastening metal anchors and post-installed reinforcing bars.

The role of mineral fillers, in particular in component B, is to adjust the final performance with regard to mechanical strength and performance as well as long term durability. By optimizing the fillers, it is possible to optimize the water/solids ratio which allows for an efficient and fast hydration of the aluminous cement and a low porosity of the final cement matrix.

The inorganic mortar system comprising the at least one alkali and/or earth alkaline metal salt can be used for a chemical fastening of anchoring means, preferably of metal elements, such as anchor rods, in particular threaded rods, bolts, steel reinforcement bars or the like into mineral substrates, such as structures made of brickwork, concrete, pervious concrete or natural stone. In particular, the inorganic mortar system can be used for a chemical fastening of anchoring means, such as metal elements, in boreholes. It has been found out, that the use of at least one alkali and/or earth alkaline metal salt in such an inorganic mortar system significantly accelerates curing of the cement.

Hence, the use of at least one alkali and/or earth alkaline metal salt in an inorganic mortar system according to the present invention is particular to accelerate curing of the cement.

The at least one alkali and/or earth alkaline metal salt comprised in the inorganic mortar, especially when present in component A, is particularly applied in a method for a chemical fastening of anchoring means, preferably of metal elements, in mineral substrates, such as structures made of brickwork, concrete, pervious concrete or natural stone.

Moreover, the inorganic mortar system comprising the at least one alkali and/or earth alkaline metal salt may be used for the attachment of fibers, scrims, fabrics or composites, in particular of high-modulus fibers, preferably of carbon fibers, in particular for the reinforcement of building structures, for example walls or ceilings or floors, or further for mounting components, such as plates or blocks, e.g. made of stone, glass or plastic, on buildings or structural elements. However, in particular it is used for fastening of anchoring means, preferably metal elements, such as anchor rods, in particular threaded rods, bolts, steel reinforcement bars or the like into recesses, such as boreholes, in mineral substrates, such as structures made of brickwork, concrete, pervious concrete or natural stone, whereby the components of the two-component inorganic mortar system are prior mixed, for example by means of a static mixer or by destroying a cartridge or a plastic bag, or by mixing components of a multi-chamber pails or sets of buckets.

The following example illustrates the invention without thereby limiting it.

### EXAMPLES

### 1. Preparation of component A and component B

The cementitious component A as well as the initiator component B of the comparative example 1 and 2 and of inventive examples 1 and 2 are initially produced by mixing the constituents specified in Tables 1 and 2, respectively. The proportions that are given are expressed in wt.-%.

### 1.1 Component A

16.53 or 16.38 grams, respectively, of deionized water, 0.75 grams of 85% phosphoric acid (blocking agent), 1.2 grams Ethacryl G^{®} (superplasticizer), and 0.02 grams Nuosept^{®} (biocide) were homogenized at room temperature, and whilst stirring with a dissolver, the calcium aluminate cement (81.00 grams, pure Ternal White^{®}) is added in subsequent small portions, to obtain finally a smooth, liquid pasty slurry of the blocked cement in water, the pH being below 7. After addition of the calcium aluminate cement, in the inventive example 0.15 grams of lithium sulfate, were added before 0.5 grams xanthan gum (thickener) were added and the slurry was homogenized. Alternatively, the accelerator can also be added already in advance to the liquid phase.

**Table 1: Composition of binder component A:**

| **Ingredients of A-component** | **Binder component A0** | **Binder component A1** |
|---|---|---|
| Water | 16.53 | 16.38 |
| Ternal White | 81.00 | 81.00 |
| 85% H₃PO⁴ | 0.75 | 0.75 |
| Xanthan Gum | 0.50 | 0.50 |
| Ethacryl G | 1.20 | 1.20 |
| Nuosept | 0.02 | 0.02 |
| Lithium sulfate | - | 0.15 |

### 1.2 Component B

In the respective amount deionized water, 4.0 grams of NaOH pellets (Activator), 0.65 grams of Ecodis^{®} P50 (superplasticizer), 0.4 grams Optigel^{®} WX (thickener), optionally 0.43 grams Li₂SO₄ (accelerator), 1.93 grams of citric acid and 1.20 grams of tartaric acid were dissolved. Whilst stirring with a dissolver, the mixture of fillers was added in subsequent portions: 33.00 grams corundum ZWSK 150 or 34.00 grams of calcite Omyacarb 130 AL, 18.00 grams ZWSK 360 or 15.39 grams Omyacarb 15 AL, 8.89 grams ZWSK 800 or 9.0 grams Omyacarb 2 AL and 14.5 grams or 13.0 grams, respectively, of calcite Calofort U, to obtain finally a smooth, liquid pasty slurry of the fillers in water, the pH being above 12.

**Table 2: Composition of different activator components B:**

| **Ingredients of B-components with corundum** | **B0** | **B1** | **Ingredients of B-components with calcites** | **B2** | **B3** |
|---|---|---|---|---|---|
| Water | 16.98 | 17.43 | Water | 19.98 | 20.43 |
| NaOH (s) | 4.00 | 4.00 | NaOH (s) | 4.00 | 4.00 |
| Li₂SO₄ | 0.45 | - | Li₂SO₄ | 0.45 | - |
| Citric acid | 1.93 | 1.93 | Citric acid | 1.93 | 1.93 |
| Tartaric acid | 1.20 | 1.20 | Tartaric acid | 1.20 | 1.20 |
| Ecodis P50 | 0.65 | 0.65 | Ecodis P50 | 0.65 | 0.65 |
| ZWSK 150 | 33.00 | 33.00 | Omyacarb 130 | 34.00 | 34.00 |
| ZWSK 360 | 18.00 | 18.00 | Omyacarb 15 | 15.39 | 15.39 |
| ZWSK 800 | 8.89 | 8.89 | Omyacarb 2 | 9.00 | 9.00 |
| Calofort U | 14.50 | 14.50 | Calofort U | 13.00 | 13.00 |
| Optigel WX | 0.40 | 0.40 | Optigel WX | 0.40 | 0.40 |

### 3. Determination of the mechanical performance

After the preparation of the single components, the corresponding A- and B-components were filled into plastic hard cartridges in a mixing ratio of A:B component = 3:1. The hard cartridge was placed into a dispenser and injected into boreholes in a concrete plate. The boreholes exhibited a depth of 72 mm and a diameter of 14 mm. The boreholes were cleaned by compressed air cleaning and brushing prior to injection of the mortar. Then, a threaded rod with a steel grade of 12.9 was inserted in the borehole. The pull-out strength was measured after different curing times to determine the improved curing behavior of the inventive examples. Each series consisted of 4 pull-out values per curing time. The results of the pull-out tests are given in **Table 3.**

**Table 3: Mean pull-out values in N/mm² after different curing times**

| **Pull-out test** | **A0 + B0 (comparative 1)** | **A1 + B1 (inventive 1)** | **A0 + B2 (comparative 2)** | **A1 + B3 (inventive 2)** |
|---|---|---|---|---|
| **18h** | 21.85 | 23.53 | 21.92 | 23.66 |
| **24h** | 21.89 | 25.24 | 22.90 | 25.14 |

These results show that the multi-component calcium aluminate cement-based slurries comprising the accelerator component in the A-component significantly improve the load values after 18h and 24h of curing compared to the systems, where the accelerator compound is present in the B-component. This shows that by addition of the at least one alkali and/or earth alkaline metal salt accelerator, in particular as shown the Li-accelerator, to the A-component, even when using very low concentrations, leads to a more homogeneous distribution within the mortar and to improved curing and hence hardening behavior in the inventive examples, in particular independent of the fillers used in the initiator component.

## Claims

1. Use of at least one alkali and/or earth alkaline metal salt in an inorganic mortar system for a chemical fastening of anchoring means in mineral substrates to accelerate curing of the cement, comprising a curable aluminous cement component A and an initiator component B for initiating the curing process, component A further comprising at least one blocking agent selected from the group consisting of phosphoric acid, metaphosphoric acid, phosphorous acid, boric acid and phosphonic acids, and component B comprising an activator.

2. Use according to claim 1, wherein the aluminous cement component A is an aluminous cement component based on an aqueous-phase calcium aluminate cement.

3. Use according to claim 1 or 2, wherein component B further comprises at least one retarder, at least one mineral filler and water.

4. Use according to any one of the preceding claims, wherein the least one alkali and/or earth alkaline metal salt to accelerate curing of the cement is comprised in the curable aluminous cement component A of the inorganic mortar system.

5. Use according to any one of the preceding claims, wherein the least one alkali and/or earth alkaline metal salt to accelerate curing of the cement is constituted of at least one alkali and/or earth alkaline metal salt selected from the group consisting of hydroxides, chlorides, sulfates, phosphates, monohydrogen phosphates, dihydrogen phosphates, nitrates, carbonates and mixtures thereof, preferably

6. Use according to any one of the preceding claims, wherein the least one alkali and/or earth alkaline metal salt to accelerate curing of the cement is lithium hydroxide, lithium sulfate, lithium sulfate monohydrate, lithium carbonate, lithium nitrate, lithium chloride, lithium formate or lithium phosphate, most preferably is lithium sulfate or lithium sulfate monohydrate.

7. Use according to any one of the preceding claims, wherein the activator comprises at least one alkali and/or alkaline earth metal salt, the at least one retarder is selected from the group consisting of citric acid, tartaric acid, lactic acid, salicylic acid, gluconic acid and mixtures thereof, and the at least one mineral filler is selected from the group consisting of limestone fillers, sand, corundum, dolomite, alkaline-resistant glass, alumina, crushed stones, gravels, pebbles and mixtures thereof.

8. Use according to any one of the preceding claims, wherein the activator only comprises sodium hydroxide.

9. Use according to any one of the preceding claims, wherein the least one alkali and/or earth alkaline metal salt to accelerate curing of the cement is in the product obtained by mixing components A and B is present in the range of from about 0.05 wt.-% to 10.0 wt.-%.

10. Use according to any one of the preceding claims, wherein the anchoring means are anchor rods, threaded anchor rods, bolts or steel reinforcement bars.

11. Use according to any one of the preceding claims, wherein the mineral substrates are structures made of brickwork, concrete, pervious concrete or natural stone.

12. Use according to any one of the preceding claims in a method for a chemical fastening of anchoring means, preferably of metal elements, in mineral substrates, such as structures made of brickwork, concrete, pervious concrete or natural stone.
